# EUROPEAN PATENT APPLICATION

(11) **EP 3 993 427 A1**
(43) Date of publication of application: **04.05.2022**
(21) Application number: 20929033.7
(22) Date of filing: 13.11.2020
(51) Int. Cl.: H04N 21/2187, H04N 21/239, H04N 21/478, H04N 21/485, G06Q 30/02

(54) **METHOD, APPARATUS AND SYSTEM FOR CONFIGURING LIVE BROADCAST TASK TARGET**

(30) Priority: 03.04.2020 CN 202010259189
(71) Applicant: Beijing Dajia Internet Information Technology Co., Ltd., Beijing 100085 (CN)
(72) Inventor: LIANG, Xuhua, Beijing 100085 (CN)
(74) Representative: Mathys & Squire
(86) International application number: PCT/CN2020/128826
(87) International publication number: WO 2021/196630

(57) **Abstract**

The present disclosure relates to a method, apparatus and system for configuring a live broadcast task target. The method comprises: receiving a task target configuration instruction for a specified task of live broadcast; in response to the task target configuration instruction, determining candidate task targets according to historical data representing a task target of the specified task; using the candidate task targets as optional configuration items, and displaying same on a task target configuration interface of a live broadcast client; and in response to a selection operation for the optional items, configuring the task target of the specified task. Also disclosed are an apparatus and system for configuring a live broadcast task target, and an electronic device and a computer-readable storage medium. The technical solution provided by the present disclosure can solve the problem in the art of low efficiency in configuring a task target.

## Description

### Cross Reference to Related Applications

The present disclosure claims priority to Chinese Patent Application No. 202010259189.1, filed to China National Intellectual Property Administration on April 3, 2020 and entitled "METHOD, APPARATUS AND SYSTEM FOR CONFIGURING TASK GOAL APPLIED TO LIVE STREAM, AND ELECTRONIC DEVICE", the entire contents of which are incorporated herein by reference.

### Field

The present disclosure relates to the technical field of Internet, in particular to a method, apparatus and system for configuring a task goal of a live stream.

### Background

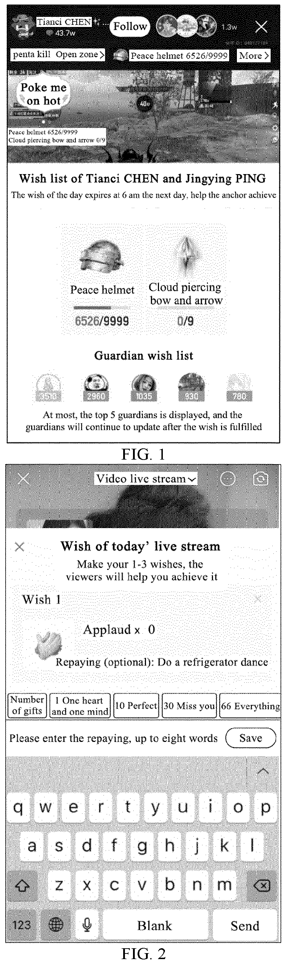

With rapid development of a live stream industry, there is an increasing demand for interactions between viewers and their favorite live streamers. At present, in order to stimulate users' interest in watching, increase viewing volume and enhancing user stickiness, some live stream platforms have introduced interactive manners such as giving virtual gifts by fans to live streamers during live streams. For a live streamer, the more virtual gifts the fans give, the more popular the live streamer is and the higher income the live streamer gets. Therefore, obtaining virtual gifts has become one of the main tasks that the live streamers expect to complete in the live streams. In order to motivate themselves to achieve a goal of obtaining a certain quantity of virtual gifts in the task of "obtaining virtual gifts", the live streamers may complete the goal setting by configuring wish lists. Fig. 1 is a schematic diagram of a wish list configured by a live streamer for fans to view in the prior art. However, at present, when configuring a wish list, a live streamer needs to manually and sequentially select categories of the virtual gifts and fill in corresponding quantities of the virtual gifts, which is inefficient.

### Summary

The present disclosure provides a method, apparatus, and system for configuring a task goal of a live stream, so as to at least solve the problem in the prior art of low efficiency in configuring a task goal. The technical solutions of the present disclosure are as follows.

According to a first aspect of an embodiment of the present disclosure, a method for configuring a task goal of a live stream is provided, and includes: receiving a task goal configuration instruction for a specified task; determining, in response to the task goal configuration instruction, candidate task goals according to historical data representing a task goal of the specified task; displaying the candidate task goals as optional configuration items on a task goal configuration interface of a client for the live stream; and configuring, in response to a selection operation for the optional configuration items, the task goal of the specified task.

According to a second aspect of an embodiment of the present disclosure, a method for configuring a task goal of a live stream is provided, and includes: sending, by a client for the live stream, a task goal configuration instruction for a specified task to a server; determining, by the server, candidate task goals according to historical data capable of representing a task goal of the specified task in response to the received task goal configuration instruction; sending the candidate task goals to the client for the live stream; displaying, by the client for the live stream, the candidate task goals as optional configuration items on a task goal configuration interface of the client for the live stream; and configuring, in response to a selection operation for the optional configuration items, the task goal of the specified task.

According to a third aspect of an embodiment of the present disclosure, an apparatus for configuring a task goal of a live stream is provided, and includes: a receiving module, configured to receive a task goal configuration instruction for a specified task; a determining module, configured to determine, in response to the task goal configuration instruction, candidate task goals according to historical data representing a task goal of the specified task; a display module, configured to display the candidate task goals as optional configuration items on a task goal configuration interface of a client for the live stream; and a configuration module, configured to configure, in response to a selection operation for the optional configuration items, the task goal of the specified task.

According to a fourth aspect of an embodiment of the present disclosure, an apparatus for configuring a task goal of a live stream is provided, and includes: a sending module, configured to send a task goal configuration instruction for a specified task to a server, wherein the server determines, in response to the received task goal configuration instruction, candidate task goals according to historical data representing a task goal of the specified task, and the candidate task goals are sent to the client for the live stream; and a display module, configured to display the candidate task goals as optional configuration items on a task goal configuration interface of the client for the live stream; and configuring, in response to a selection operation for the optional configuration items, the task goal of the specified task.

According to a fifth aspect of an embodiment of the present disclosure, a system for configuring a task goal of a live stream is provided, and includes a client for the live stream and a server. The server is configured to determine, in response to a received task goal configuration instruction sent by the client for the live stream for a specified task, candidate task goals according to historical data representing a task goal of the specified task, and send the candidate task goals to the client for the live stream. The client for the live stream is configured to send the task goal configuration instruction to the server, display the received candidate task goals sent by the server as optional configuration items on a task goal configuration interface of the client for the live stream, and configure, in response to a selection operation for the optional configuration items, the task goal of the specified task.

According to a sixth aspect of an embodiment of the present disclosure, an electronic device is provided, and includes: a processor; and a memory configured to store an instruction capable of being executed by the processor. The processor is configured to execute the instruction to perform the method for configuring the task goal of the live stream in any one of the first aspect or the second aspect.

According to a seventh aspect of an embodiment of the present disclosure, a storage medium is provided. When an instruction in the storage medium is executed by a processor of an electronic device, the processor may perform the method for configuring the task goal of the live stream in any one of the first aspect or the second aspect.

According to an eighth aspect of an embodiment of the present disclosure, a computer program product is provided. When the computer program product runs on an electronic device, the electronic device for configuring a task goal of a live stream may perform the method for configuring the task goal of the live stream in any one of the first aspect or the second aspect.

It should be understood that the above general description and the following detailed description are only exemplary and explanatory, and cannot limit the present disclosure.

### Brief Description of the Drawings

Accompanying drawings here, which are incorporated in and constitute a part of this specification, illustrate embodiments consistent with the present disclosure and, together with the specification, serve to explain principles of the present disclosure and do not constitute an inappropriate limitation on the present disclosure.
FIG. 1 is a schematic diagram of a wish list in the prior art according to an exemplary embodiment.
FIG. 2 is a schematic diagram of a task goal configuration interface according to an exemplary embodiment of the present disclosure.
FIG. 3 is a schematic diagram of an implementation environment of a method for configuring a task goal of a live stream according to an exemplary embodiment of the present disclosure.
FIG. 4A is a flow chart of a method for configuring a task goal of a live stream according to an exemplary embodiment of the present disclosure.
FIG. 4B is a schematic diagram of a task goal configuration interface according to an exemplary embodiment of the present disclosure.
FIG. 4C is a schematic diagram of another task goal configuration interface according to an exemplary embodiment of the present disclosure.
FIG. 5 is a flow chart of a method for configuring a task goal of a live stream in an actual scene according to an exemplary embodiment of the present disclosure.
FIG. 6 is a flow chart of a method for configuring a task goal of a live stream according to an exemplary embodiment of the present disclosure.
FIG. 7 is a block diagram of an apparatus for configuring a task goal of a live stream according to an exemplary embodiment of the present disclosure.
FIG. 8 is a block diagram of a system for configuring a task goal of a live stream according to an exemplary embodiment of the present disclosure.
FIG. 9 is a structural block diagram of an electronic device according to an exemplary embodiment of the present disclosure.
FIG. 10 is a structural block diagram of an electronic device according to an exemplary embodiment of the present disclosure.

### Detailed Description of the Embodiments

In order to enable those of ordinary skill in the art to better understand technical solutions of the present disclosure, the technical solutions in embodiments of the present disclosure will be clearly and fully described below in combination with the accompanying drawings.

It should be noted that the terms "first", "second", and the like in the specification and the claims of the present disclosure, as well as in the accompanying drawings, are used for distinguishing similar objects and not necessarily for describing a particular sequential or precedence order. It should be understood that data so used are interchangeable under appropriate circumstances such that the embodiments of the present disclosure described herein may be implemented in sequences other than those illustrated or otherwise described herein. The implementations described in the following exemplary embodiments do not represent all implementations consistent with the present disclosure. Rather, they are merely examples of an apparatus and a method consistent with some aspects of the present disclosure as detailed in the appended claims.

In some embodiments, the present disclosure provides a method for configuring a task goal of a live stream. A subject for implementing the method includes, but is not limited to, intelligent electronic devices such as a server, a computer, a smart phone and a wearable device which may execute predetermined processing procedures such as logic calculations by running predetermined programs or instructions. The server may be a single server or a group of servers.

In some embodiments, when it is a group of servers, all the servers in the group of servers may share stored historical data representing a task goal of a specified task, etc.

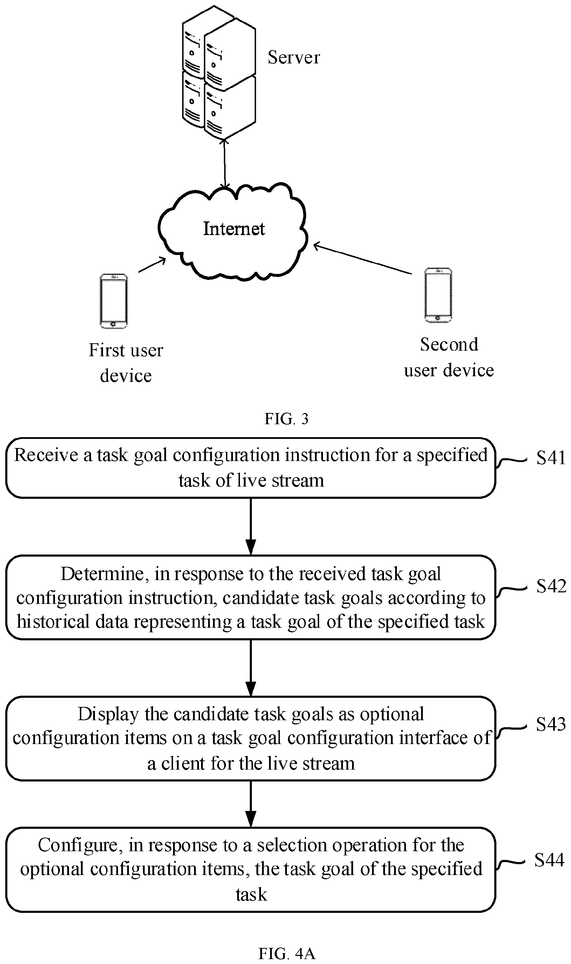

FIG. 3 is a schematic diagram of an implementation environment in which a method for configuring a task goal of a live stream is implemented according to an exemplary embodiment. The implementation environment may include a first user device and a server. The first user device may refer to, for example, a user terminal device used by a live streamer, and may establish a connection with the server by accessing the Internet.

In some embodiments, the implementation environment may further include a second user device. The second user device may refer to a fan/viewer terminal device, and the fan/viewer terminal device may also establish a connection with the server by accessing the Internet.

In some embodiments, the method provided by the embodiment of the present disclosure may be applied to the first user device, or applied to an application (APP) installed on the first user device. The APP may include, for example, a live stream APP.

Or, the server shown in the figure may also be configured to implement the method for configuring the task goal of the live stream provided by the embodiment of the present disclosure.

FIG. 4A is a flow chart of a method for configuring a task goal of a live stream according to an embodiment. The subject for implementing the method for configuring the task goal of the live stream may be a client for the live stream.

In step S41, the client for the live stream receives a task goal configuration instruction for a specified task of a live stream.

The specified task of the live stream may be understood as a task that may be executed during the live stream, such as but not limited to any one task or several tasks as follows.

A task that a single live stream (or live streams of the set number of times) accumulatively reaches a set live stream time duration.

A task that a single live stream (or live streams of the set number of times, or live streams of a set time duration) accumulatively reaches a set live stream viewing number of times.

A task that a single live stream (or live streams of the set number of times, or live streams of a set time duration) obtains the set quantity of virtual resources. The quantity of virtual resources mentioned here may include, for example, the total amount recharged by fans, or include virtual gifts of a set type and quantity, or the like.

Correspondingly, the task goal may be understood as a task attribute/task content of the specified task. Corresponding to the tasks of the above types in sequence, for example, the task goal may include but is not limited to: a set time duration of a live stream, a set live stream viewing number of times, total amount recharged by fans, a set type and quantity of virtual gifts, etc.

In one embodiment, a user may click/press/swipe a "Configure task goal" button corresponding to the specified task in a graphical user interface of the client for the live stream to send the task goal configuration instruction to the client for the live stream. At the moment, if the client for the live stream detects out a click/press/swipe operation on the "Configure task goal" button, it means that the task goal configuration instruction for the specified task of the live stream is received.

It should be noted that if there are a plurality of tasks for which task goals may be configured, button controls corresponding to different task types may be set in the client for the live stream. The client for the live stream may determine for which task the task goal is currently set according to the task type corresponding to the button control that is detected out to be operated (such as click/press/swipe), and the determined task is the specified task. If there is only one task, after the client for the live stream receives the task goal configuration instruction, the one task is the specified task by default.

In addition to inputting the task goal configuration instruction based on a button, in one embodiment, the user may further send the task goal configuration instruction to the client for the live stream by means of voices, gestures, or the like.

For example, taking a voice mode as an example, an intelligent voice assistant in the client for the live stream receives a voice signal through a microphone on a terminal device where the client for the live stream is located, and performs semantic analysis on the received voice signal (for example, the voice signal may include "configure a task goal of the specified task", "open a task goal configuration interface of the specified task", and the like), so as to determine whether the user has sent the task goal configuration instruction for the specified task. If it is determined as yes, the intelligent voice assistant sends the task goal configuration instruction for the specified task to the client for the live stream.

The intelligent voice assistant may be understood as third-party software that is provided with a voice recognition function and a function of evoking the task goal configuration interface of the client for the live stream.

It should be noted that the task goal configuration interface is a graphical user interface that may be configured to display information such as configuration options (for example, optional configuration items described later) for the task goal of the specified task, and may support the user to select the configuration options based on the interface.

Or, further, the graphical user interface may further be compatible with a task goal configuration manner in the prior art, and support the user to select and/or input related parameters of the task goal based on the interface.

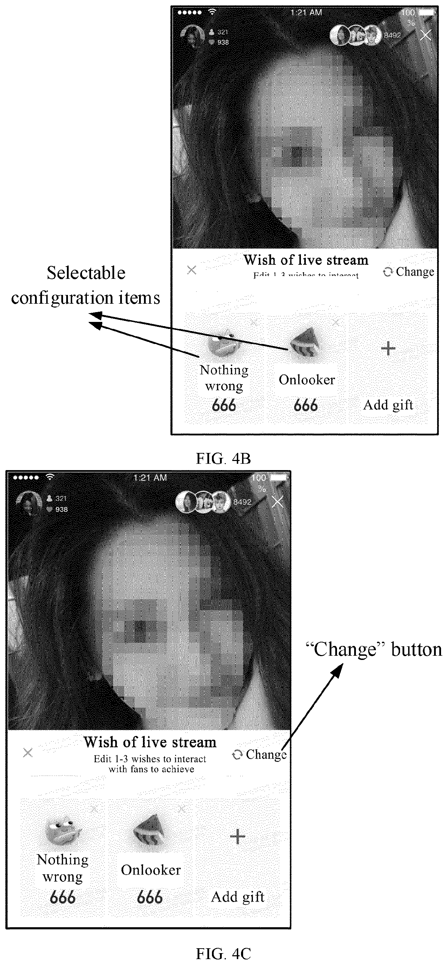

FIG. 2 is a schematic diagram of a task goal configuration interface. In an embodiment of the present disclosure, the task goal configuration interface may further be as shown in FIG. 4B.

It should be noted that, considering that the optional configuration items for the task goal of the specified task provided for the user may not meet the user's needs, the user may wish to substitute a batch of optional configuration items.

In order to meet such needs, the method provided by the embodiment of the present disclosure further considers replacing the optional configuration items for the user based on the same inventive idea. Therefore, in addition to the instruction for triggering display of the task goal configuration interface, the task goal configuration instruction of the embodiment of the present disclosure may further include, in one implementation, an instruction (referred to as "switching instruction") configured to trigger switching of the optional configuration items displayed in the task goal configuration interface and corresponding to candidate task goals. The switching instruction may also be sent by the user in a similar manner as described above.

In step S42, the client for the live stream determines, in response to the received task goal configuration instruction, the candidate task goals according to historical data representing the task goal of the specified task.

In some embodiments, the historical data representing the task goal of the specified task may include at least one of the following.

1, data of a historical task goal configured by the user (for example, a live streamer) bound to the client for the live stream for the specified task. The historical task goal is a task goal that is planned to be completed but may not necessarily be actually completed.

For example, the live streamer once configures types and quantities of virtual gifts expected to be received within 7 days. Such task goal is the historical task goal configured by the live streamer for the specified task, but the live streamer may actually achieve or fail to achieve the task goal.

2, data of a historical task goal realized by the user (for example, a live streamer) bound to the client for the live stream in executing the specified task. The historical task goal refers to a task goal that is actually completed in executing the specified task.

For example, in the past 7 days, the live streamer received a total of 2 types of virtual gifts with quantities of 5 and 10 respectively, then "2 types of virtual gifts with quantities of 5 and 10 respectively" is the historical task goal realized by the live streamer in executing the specified task (harvesting virtual gifts).

3, data of historical task goals configured by users (for example, other live streamers other than the live streamer) other than the user bound to the client for the live stream for the specified task.

4, data of historical task goals realized by the other users (for example, the other live streamers other than the live streamer) other than the user bound to the client for the live stream in executing the specified task.

In some embodiments, if there may be a situation where the user bound to the client for the live stream has not configured the task goal of the specified task, that is, the candidate task goals of the specified task may not be determined based on the historical task goal of the user bound to the client for the live stream for the specified task, whether the user who sends the configuration instruction has configured the historical task goal of the specified task may be determined in advance, and then operations corresponding to a determination result are taken according to the determination result.

For example, after the client for the live stream receives the task goal configuration instruction for the specified task, it is determined by querying (for example, querying a local database or querying a database of the server) that the user bound to the client for the live stream has configured and saved the historical task goal of the specified task, then the client for the live stream may determine the data of the historical task goal configured by the user for the specified task as the historical data representing the task goal of the specified task.

If it is determined that the user has not configured the historical task goal for the specified task, the data of the historical task goals that meets a preset condition may be used as the historical data representing the task goal of the specified task. The data of the historical task goals that meets the preset condition may include, but is not limited to, at least one of the data of the historical task goal in case 2 to case 4 described above.

In some embodiments, the client for the live stream may directly determine the task goal of the specified task represented by the historical data as the candidate task goals after determining, in response to the task goal configuration instruction, the historical data representing the task goal of the specified task.

In some embodiments, considering that the specified task of the live stream is often associated with incomes obtained by the user from performing the live stream, the association relationship is a motivation for the user as the live streamer to perform the specified task, and it is also a motivation for the user as the live streamer to accomplish the task goal when executing the specified task. Therefore, in an embodiment of the present disclosure, in order to make the determined candidate task goals meet needs of the user as the live streamer to "pursue personal incomes", step S42 that the candidate task goals of the specified task may be determined according to the historical data capable of representing the task goal of the specified task, may specifically include: an income available by the user by executing the specified task is predicted according to the data of historical income obtained by the user bound to the client for the live stream by executing the specified task as a predicted income (hereinafter referred to as "predicted income in the live stream"), that is, the predicted income in the live stream is determined; and according to the predicted income in the live stream, task goals matching the predicted income in the live stream are determined as the candidate task goals of the specified task.

In some embodiments, the predicted income in the live stream may be predicted, and the candidate task goals of the specified task may be determined based on the predicted income in the live stream. The specified task includes: obtaining virtual gifts. The candidate task goals include: types and quantities of the virtual gifts. The historical data representing the task goal of the specified task "obtaining the virtual gifts" includes: a type and quantity of each of at least one type of virtual gift obtained historically by the user (bound to the client for the live stream, for example, a live streamer).

In some embodiments, determining the candidate task goals may be realized by performing the following steps.

Step a: a historical income for a live stream of the live streamer is determined according to the historical data representing the task goal of the specified task, that is, the type and quantity of each of the at least one type of virtual gift obtained historically by the live streamer.

The at least one type of virtual gift mentioned here may include: various types of virtual gifts that the live streamer has obtained within a preset time duration, or, may include: virtual gifts that the live streamer has obtained within a preset time duration and have prices higher than a specified price, etc.

For example, suppose that the live streamer has received 10 virtual beers, 1 virtual sports car, and 30 virtual flowers accumulatively in the past 3 days, and corresponding unit prices of the three types of virtual gifts are: 10 virtual coins, 10,000 virtual coins and 20 virtual coins respectively.

It may be determined that a total income in the live streams of the live streamer in the past 3 days is 10700=10^{∗}10+1^{∗}10000+30^{∗}20 virtual coins, and a historical average daily income is about 3567 virtual coins. The historical average daily income here may be regarded as the determined historical income in the live stream of the live streamer.

Step b: the predicted income in the live stream of the live streamer is determined according to the historical income in the live stream.

In one embodiment, the determined historical income in the live stream may be directly used as the predicted income in the live stream of the live streamer. For example, in the above example, supposing that the historical average daily income of the live streamer is about 3567 virtual coins, it may be determined that the predicted income in the live stream of the live streamer in the next day is about 3567 virtual coins.

In some embodiments, the historical average daily income may further be appropriately increased or decreased according to changes in the number of viewers in a live stream room of the live streamer, and the increased or decreased historical average daily income is used as the predicted income in the live stream. For example, if it is found that the number of viewers in the live stream room of the live streamer has declined in the last few days, then some virtual coins (assuming a decrease of 100) may be reduced for the historical average daily income (3567), and a historical average daily income (3467) obtained after decrease of the virtual coins is used as the predicted income in the live stream of the live streamer.

In some embodiments, in order to motivate the live streamer to achieve a higher task goal in the process of performing the specified task, the predicted income in the live stream of the user may further be determined according to the historical income in the live stream and a preset live stream income growth factor (also referred to as an income growth factor).

The live stream income growth factor is a value greater than 1, for example, a value range may be (1.2-1.8). A product obtained by multiplying the historical income in the live stream by the live stream income growth factor is used as the predicted income in the live stream. In practical applications, when the predicted income in the live stream is calculated, a value may be randomly selected from the value range as the live stream income growth factor.

Assuming that an average daily income of the live streamer is figured out to be 3567 virtual coins, and the live stream income growth factor is 1.2, it may be predicted that the income in a live stream of the live streamer in the next day will be about 3567^{∗}1.2=4280 virtual coins.

After the predicted income in the live stream is determined, the candidate task goals matching the predicted income in the live stream for the specified task are determined based on the predicted income in the live stream. For specific implementations, refer to the following steps c and d.

The determining the candidate task goals matching the predicted income in the live stream in the embodiment of the present disclosure may be understood as determining task attributes/task content of the candidate task goals. If taking the specified task being the task that the single live stream (or live streams of the set number of times) accumulatively reaches the set live stream time duration as an example, determining the task attributes/task content of the candidate task goals may include determining the live stream time duration as the set live stream time duration.

Step c: types of virtual gifts may be randomly selected from types of available virtual gifts provided by the server as types of the virtual gifts in the determined candidate task goals. Or, the types of the virtual gifts in the determined candidate task goals may be determined according to a quantity of each of at least one type of virtual gift obtained historically by the user.

In some embodiments, assuming that the types of virtual gifts that can be obtained by the server include a total of 50 types of virtual gifts such as "flowers", "watermelon", and "beer", at least one type of virtual gift may be selected from these 50 types of virtual gifts randomly as the types of virtual gifts contained in the candidate task goals.

In some embodiments, the specific quantities of types of virtual gifts that may be contained in the candidate task goals may further be preset. For example, the quantity may be set to be "3", so 3 types of virtual gifts may be randomly selected according to the quantity.

In some embodiments, the types of the virtual gifts may also be determined based on the weight coefficients of the respective types of virtual gifts. Specifically, a weight coefficient may be configured for each of the at least one type of virtual resource according to the quantity of each of the at least one type of virtual resource obtained historically by the live streamer, and according to a configuration rule that the quantity is positively or negatively correlated with the weight coefficient. A type is selected from the type of the at least one type of virtual resource obtained historically by the live streamer according to the weight coefficient configured for each of the at least one type of virtual resource as the type of the virtual resource in the candidate task goals.

For example, if it is configured according to the configuration rule that the quantity is positively correlated with the weight coefficient, a relatively large weight coefficient may be configured for a type of received virtual gift with a relatively large quantity. Otherwise, a relatively small weight coefficient may be configured for a type of received virtual gift with a relatively small quantity. In the embodiment of the present disclosure, types of virtual gifts with relatively large weight coefficients may be selected preferably, so as to guarantee that the selected types of virtual gifts are types of virtual gifts frequently received by the live streamer, thereby guaranteeing the completion rate of the task goal to a certain extent.

For example, suppose that within 7 days, the live streamer has received 10 virtual gifts of type A, 5 virtual gifts of type B, and 0 virtual gift of type C, weight coefficients of the three types A, B, and C may be configured to be 10, 5, 1 (if 0 is received, the default weight is 1) respectively.

Based on the above weight coefficient configuration, in a mode that virtual gift types with relatively large weight coefficients are preferably selected, for example, when only two types of virtual gifts are selected, virtual gifts of type A and type B will be preferably selected. Since virtual gifts of type A and type B happen to be types of virtual gifts often received by the live streamer, the completion rate of the task goal may be guaranteed to a certain extent.

Step d: the quantities of the virtual gifts in the candidate task goals are determined according to the predicted income in the live stream, the types of the virtual resources in the candidate task goals, and a unit price/income corresponding to each type of virtual resource in the candidate task goals.

In some embodiments, the unit price of each type may be determined according to the types of the virtual gifts in the determined candidate task goals, and a preset mapping relationship between different types of virtual gifts and their corresponding unit prices/incomes. Further, according to the predicted income in the live stream and the determined unit price/income, the quantity of each type of virtual gift is determined.

For example, incomes occupied by these two types of virtual gifts in the predicted income in the live stream are as follows.

Assuming that a total of n types of virtual gifts are selected.

When n=1, an income occupied by the n^{th} type of virtual gift in the predicted income in the live stream=the predicted income in the live stream.

When n>1, an income occupied by the first type of virtual gift among the n types in the predicted income in the live stream = the predicted income in the live stream/2; an income occupied by the n^{th} type of virtual gift among the n types in the predicted income in the live stream = the predicted income in the live stream - the sum of incomes occupied by the other n-1 types of virtual gifts in the predicted income in the live stream; and an income occupied by an i^{th} type of virtual gift among the n types in the predicted income in the live stream = (the predicted income in the live stream - the sum of incomes occupied by other i-1 types of virtual gifts in the predicted income in the live stream)/2. The value range of i is [2, n-1].

The serial number i representing the type among the n types may be associated with a corresponding unit price. Specifically, the serial number i representing the type may be directly proportional to the unit price. In this way, gifts with a low unit price may account for a high income in the predicted income in the live stream; while gifts with a high unit price may account for a low income in the predicted income in the live stream.

After the income occupied by each type of virtual gift in the predicted income in the live stream is figured out, the quantity of each type of virtual gift in the candidate task goals may be figured out according to the unit price of each type of virtual gift using a calculation manner of "quantity=income/unit price".

Because the live streamer often receives a large quantity of gifts with low unit prices, and a small quantity of gifts with high unit prices, the above algorithm may make the determined candidate task goals more suitable for distribution of the quantities of virtual gifts actually possibly received by the live streamer on the types, which may be conductive to guaranteeing the degree of completion of the task goal to a certain degree.

If a quantity is figured out to be a decimal, it may be converted to an integer by rounding up. For example, suppose that the predicted income in the live stream is 4280 virtual coins, types of virtual gifts in the determined candidate task goals are "flowers" and "beer" respectively, and corresponding unit prices of "flowers" and "beer" are 20 virtual coins and 10 virtual coins respectively. According to the above calculation rules, it may be determined that virtual coins occupied by "flowers" are 4280/2=2140, and virtual coins occupied by "beer" are 4280-2140=2140. According to the respective unit prices of "flowers" and "beer", it may be determined that the quantity of "flowers" is 107=2140/20, and the quantity of "beer" is 214=2140/10.

In step S43, the client for the live stream displays the candidate task goals as optional configuration items on a task goal configuration interface of the client for the live stream.

In some embodiments, the candidate task goals may be displayed as the optional configuration items. The optional configuration items are items that may be selected by the user through a "Selection" operation.

FIG. 4B is a schematic diagram of the task goal configuration interface of the present disclosure. The task goal configuration interface shown in the figure includes optional configuration items corresponding to two candidate task goals of "Nothing wrong" and "Onlooker" (gift icons as shown in the figure). The two icons "Nothing wrong" and "Onlooker" correspond to types of virtual gifts in the candidate task goals, while the numbers "666" indicate the quantities of the virtual gifts corresponding to the two types in the candidate task goals.

FIG. 4C is a schematic diagram of another task goal configuration interface according to an exemplary embodiment. In some embodiments, considering that the user may be dissatisfied with content of the displayed optional configuration items, the task goal configuration interface may include a trigger button such as a "Change" button. By clicking the button, the user may trigger generation of the switching instruction described above. In response to the switching instruction, the client for the live stream may re-determine new optional configuration items to replace the currently displayed optional configuration items.

In some embodiments, in response to the switching instruction, candidate task goals of the specified task may be determined according to other historical task goals associated with the specified task so that the determined candidate task goals may be equivalent to that the candidate task goals corresponding to the currently displayed optional configuration items are changed. The other historical task goals include: historical data capable of representing the task goal of the specified task other than the historical data based on which the candidate task goals are determined in response to the most recently received task goal configuration instruction.

In some embodiments, in response to the switching instruction, the candidate task goals may also be determined according to the historical data based on which the candidate task goals are determined in response to the most recently received task goal configuration instruction. However, when determining the candidate task goals, a determination strategy for determining the candidate task goals may be changed so that the determined candidate task goals may be different from the candidate task goals determined in response to the most recently received task goal configuration instruction.

In step S44, in response to a selection operation for the optional configuration items, the task goal of the specified task is configured.

The selection operation may specifically include a click operation or a swiping operation for the optional configuration items, etc.

Based on the optional configuration items selected by the selection operation, the client for the live stream sets candidate task goals corresponding to the selected optional configuration items as the task goal of the specified task for the user bound to the client for the live stream.

For example, if the user double-clicks, based on the task goal configuration interface as shown in FIG. 4B, an optional configuration item including "Nothing wrong" and "666", the task goal of the specified task may be set as: obtaining 666 virtual gifts of "Nothing wrong".

If the user not only double-clicks the optional configuration item including "Nothing wrong" and "666", and further clicks an optional configuration item including "onlooker" and "666" within a preset time duration after the double-click, the task goal of the specified task may be set as obtaining 666 virtual gifts of "Nothing wrong" and 666 virtual gifts of "onlooker" respectively.

In some embodiments, a "Confirm" button may also be set on the task goal configuration interface, so after the user selects an optional configuration item, the client for the live stream is triggered by clicking the "Confirm" button to configure the task goal of the specified task based on the candidate task goal corresponding to the selected optional configuration item.

The configured task goal of the specified task may be stored locally in the client for the live stream, and may also be synchronized to the corresponding server. When the user bound to the client for the live stream conducts a live stream, the server may send the task goal to the client of fans watching the live stream to be displayed, so the fans may be informed of the live streamer's "live stream wish list" and then send gifts on the live stream wish list to assist the live streamer in reaching the task goal.

By using the method provided by the embodiment of the present disclosure to configure the task goal, the problem that in the related art, the user needs to manually and sequentially select categories of virtual gifts and fill in corresponding quantities of the virtual gifts every time task goals are configured can be avoided, thereby improving operation convenience and improving the efficiency of configuring the task goal. At the same time, it can be guaranteed that the configured task goal is more in line with actual situations of the user, which is conducive to improving the completion rate of the task goal.

### Embodiment 2

In some embodiments, application scenarios of a method for configuring a task goal of a live stream may include a client of a viewer, a client of a live streamer, a Web server, and a Redis database. The client of the viewer may give virtual gifts to the client of the live streamer. The client of the live streamer may send a request to the Web server to obtain information related to a wish list, so as to configure a wish list configuration interface. The Redis database may be configured to store wish list information of the live streamer.

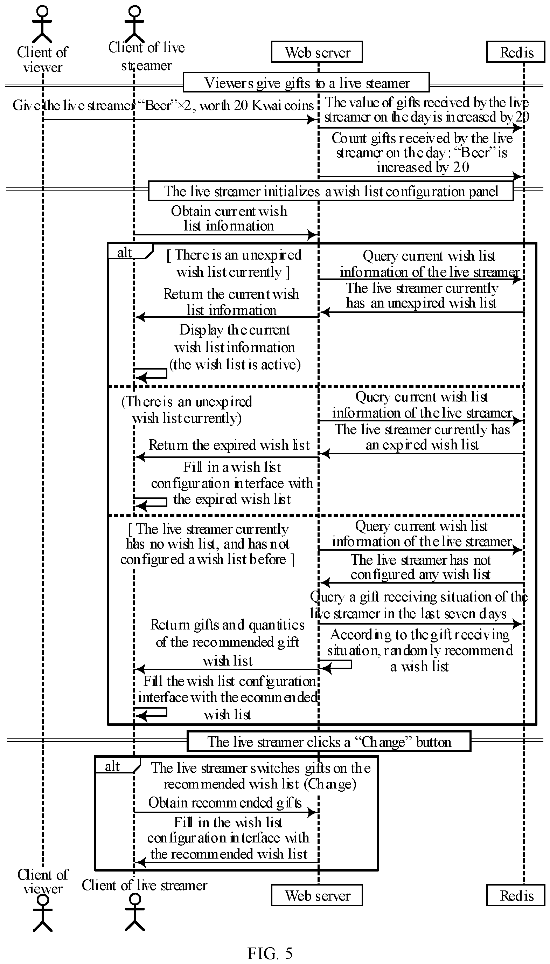

FIG. 5 is a schematic diagram of a practical application process of the method for configuring the task goal of the live stream provided by an embodiment of the present disclosure. The process specifically includes the following steps.

Assuming that a live streamer currently needs to configure a "wish list" (namely, configuring the task goal in Embodiment 1) for types of virtual gifts expected to obtain and a quantity corresponding to each type of virtual gifts, it may be configured by the following method.

First, the live streamer may click a configuration button on a wish list configuration interface in the client of the live streamer. At this moment, if the client of the live streamer detects out that the live streamer clicks the configuration button, it may send a request for obtaining current wish list information of the live streamer to the Web server.

Second, after receiving the request sent by the client of the live streamer, the Web server may query the Redis database for the wish list information related to the live streamer based on the request, and return a query result to the client of the live streamer so that the client of the live streamer may fill in the wish list configuration interface.

Generally, after the live streamer's wish list information is found in the Redis database, the query result may include at least one of the following cases.

Case 1: the Web server finds that there is an unexpired wish list in the Redis database.

The unexpired wish list may be understood as a wish list that is in an active state. For example, assuming that a wish list configured every day will be automatically closed at 6 am the next day, in the time period before 6 am the next day, it can be said that the wish list is in the active state, that is, it has not expired; and in the time period after 6 am the next day, it can be said that the wish list has expired.

Case 2: the Web server finds that there is an expired wish list configured by the live streamer before in the Redis database.

Case 3: upon query, the Web server finds that the live streamer has not configured any wish list.

For Case 1, the embodiment of the present disclosure may usually return the unexpired wish list to the client of the live streamer so as to make the client of the live streamer display same on the wish list configuration interface.

For Case 2, the embodiment of the present disclosure may return the expired wish list to the client of the live streamer so that the client of the live streamer can fill in the wish list configuration interface based on the wish list.

For Case 3, the embodiment of the present disclosure may usually query the gifts received by the live streamer in the last seven days, then randomly recommend a wish list according to the gifts received by the live streamer in the last seven days, and return types of virtual gifts contained in the wish list and the quantity corresponding to each type of virtual gifts to the client of the live streamer so that the client of the live streamer can fill in the wish list configuration interface.

Hereinafter, taking the query result being Case 3 as an example, a method of filling in the wish list configuration interface in the embodiment of the present disclosure will be described in detail.

In the embodiment of the present disclosure, in order to match the recommended wish list with an income in a live stream of the live streamer, a predicted income in the live stream of the live streamer in the next day may be predicted in advance, and then based on the predicted income in the live stream, a wish list matching the income is recommended. A prediction manner is as follows.

Firstly, a historical average daily income in the live stream(s) of the live streamer is figured out.

Assuming that types of gifts received by the live streamer in the last 7 days, quantities of the virtual gifts, and a virtual value corresponding to each virtual gift (measured by the quantity of virtual coins) are found as shown in Table 1 below.

**Table 1**

| Type(s) of virtual gifts | Quantity of virtual gifts | Corresponding virtual value(s) of virtual gifts |
|---|---|---|
| Beer | 10 | 10 |
| Sports car | 1 | 10000 |
| Flowers | 30 | 20 |

Based on data shown in the above table, it may be figured out that the historical average daily income in the live stream(s) of the live streamer is (10^{∗}10 + 10000 + 30^{∗}20)/7 = 1529 (the quantity of virtual coins).

Secondly, according to the historical average daily income in the live stream(s) and a live stream income growth factor (assumed to be 1.2), it may be determined that the predicted income in the live stream of the live streamer is 1529^{∗}1.2 = 1835 (the quantity of virtual coins).

For a detailed description of the live stream income growth factor, reference may be made to the related description in Embodiment 1, which will not be repeated here.

Then, the types of the virtual gifts contained in the wish list and a quantity of each type of virtual gifts are determined based on the predicted income in the live stream.

When the types of the virtual gifts are determined, in order to improve the degree of completion of the wish list, a weight coefficient corresponding to each type of virtual gifts may be determined according to a historical receiving frequency of virtual gifts, and then the type of the virtual gift is determined based on the weight coefficient.

For example, suppose there are currently four types of virtual gifts: "beer", "sports car", "flowers", and "watermelon", and based on a historical gift receiving condition in the past 7 days, it may be known that the number of times of receiving "flowers" is 30, the number of times of receiving "beer" is 10, the number of times of receiving "sports car" is 1, and the number of times of receiving "watermelon" is 0, it may be determined that weight coefficients of "flowers", "beer", "sports car" and "watermelon" are: 30, 10, 1, and 1 respectively. The weight coefficient of the unreceived virtual gift "watermelon" is configured to be 1 instead of 0 to ensure that all types of virtual gifts may be selected.

In some embodiments, assuming that the live streamer expects to obtain two types of virtual gifts, based on the weight coefficients, two types of virtual gifts with larger weight coefficients may be selected from the above types of virtual gifts, such as "flowers" and "beer".

After the types of the virtual gifts are determined, the corresponding quantities may be determined based on the values corresponding to the virtual gifts. For example, in the embodiment of the present disclosure, it may be determined that the quantity of "flowers" is 46 and the quantity of "beers" is 92. For a specific calculation manner, please refer to the related description of Embodiment 1, which will not be repeated here.

In the embodiment of the present disclosure, after the types and quantities of the virtual gifts are determined, a wish list may be recommended based on the determined types and quantities of the virtual gifts, and the wish list is returned to the client of the live streamer.

In some embodiments, if the live streamer receives the currently recommended wish list but is not satisfied with it, the live streamer may click a "Change" button on the wish list configuration interface to switch the types of the virtual gifts contained in the wish list and a quantity of each type of virtual gifts.

After the client of the live streamer detects out that the live streamer has clicked the "Change" button, the client of the live streamer may send a request to the Web server to generate a new wish list, and after generating the wish list, the Web server may return the wish list to the client of the live streamer so that the client of the live streamer can fill in the wish list configuration interface based on the wish list.

After the live streamer clicks the "Change" button, the steps of generating the wish list by the Web server are the same as the manner of generating the recommended wish list introduced above, which will not be repeated here.

### Embodiment 3

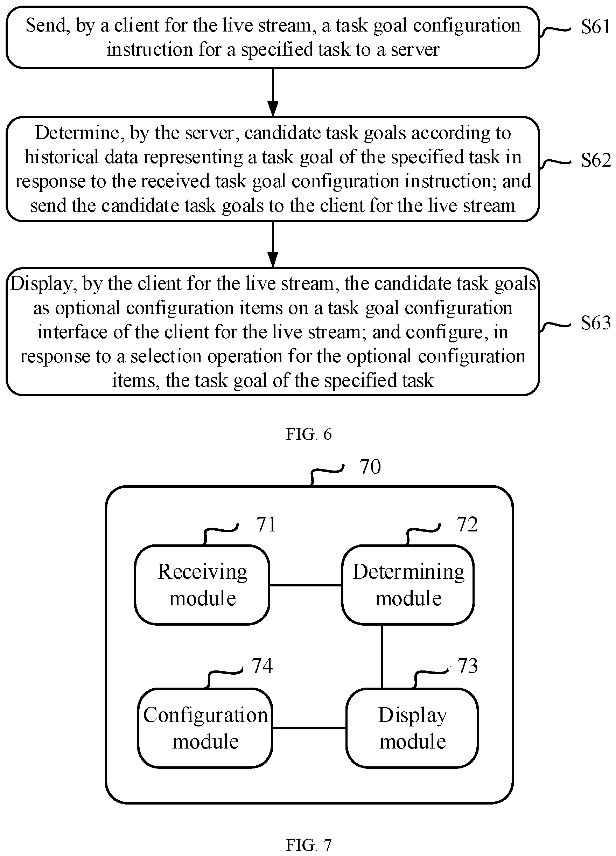

FIG. 6 is a flow chart of another method for configuring a task goal of a live stream according to an embodiment of the present disclosure. The method is completed by a client for the live stream and a server in cooperation. The server mentioned here may be an independent server, or a server cluster composed of a plurality of servers. The method may include the following steps.

S61, the client for the live stream sends a task goal configuration instruction for a specified task to a server.

S62, the server determines, in response to the received task goal configuration instruction, candidate task goals according to historical data representing a task goal of the specified task; and sends the candidate task goals to the client for the live stream.

S63, the client for the live stream displays the candidate task goals as optional configuration items on a task goal configuration interface of the client for the live stream; and configures, in response to a selection operation for the optional configuration items, the task goal of the specified task.

S62 may refer to related descriptions in Embodiment 1 and Embodiment 2 on how the client for the live stream realizes determining of the candidate task goals of the specified task.

By using the method provided by the embodiment of the present disclosure to configure the task goal, the problem that in related art, the user needs to manually and sequentially select categories of virtual gifts and fill in corresponding quantities of the virtual gifts every time task goals are configured can be avoided, thereby improving operation convenience and improving the efficiency of configuring the task goal. At the same time, it can be guaranteed that the configured task goal is more in line with actual situations of the user, which is conducive to improving the completion rate of the task goal.

### Embodiment 4

FIG. 7 is a block diagram of an apparatus 70 for configuring a task goal of a live stream according to an exemplary embodiment. Referring to FIG. 7, the apparatus includes a receiving module 71, a determining module 72, a display module 73 and a configuration module 74.

The receiving module 71 is configured to receive a task goal configuration instruction for a specified task.

The determining module 72 is configured to determine, in response to the task goal configuration instruction, candidate task goals according to historical data representing a task goal of the specified task.

The display module 73 is configured to display the candidate task goals as optional configuration items on a task goal configuration interface of a client for the live stream.

The configuration module 74 is configured to configure, in response to a selection operation for the optional configuration items, the task goal of the specified task.

Regarding the apparatus in Embodiment 4, the specific manner in which each module executes operations may be described with reference to the corresponding method in Embodiment 1.

In some embodiments, the task goal configuration instruction may include an instruction configured to trigger display of the task goal configuration interface, or an instruction configured to trigger switching of the optional configuration items displayed in the task goal configuration interface and corresponding to the candidate task goals.

In some embodiments, the historical data includes data of a historical income obtained by a user bound to the client for the live stream by executing the specified task. Thus, the determining module 72 may include: an income prediction unit, configured to determine, in response to the task goal configuration instruction, a predicted income in the live stream according to the data of the historical income obtained by the user bound to the client for the live stream by executing the specified task; and a task goal determining unit, configured to determine, according to the predicted income in the live stream, candidate task goals matching the predicted income in the live stream.

In some embodiments, in response to the specified task including obtaining virtual resources, the candidate task goals include types and quantities of the virtual resources. The data of the historical income obtained by the user bound to the client for the live stream by executing the specified task includes a type and the quantity of each of at least one type of virtual resource obtained historically by the user. Thus, the task goal determining unit may specifically be configured to: configure a weight coefficient for each of the at least one type of virtual resource respectively according to the quantity of each of the at least one type of virtual resource obtained historically by the user, and according to a configuration rule that the quantity is positively or negatively correlated with the weight coefficient; select a type from the at least one type of virtual resource obtained historically by the user according to the weight coefficient configured for each of the at least one type of virtual resource as types of the virtual resources in the candidate task goals; and determine the quantity of the virtual resources in the candidate task goals according to the predicted income in the live stream, the types of the virtual resources in the candidate task goals, and an income corresponding to each type of virtual resource in the candidate task goals.

In some embodiments, the income prediction unit is further configured to: determine a historical income of the user according to the data of the historical income; and determine the predicted income in the live stream according to the historical income and a preset income growth factor. The predicted income in the live stream is configured to predict an income capable of being obtained by the user by executing the specified task or the determined historical income of the user.

The apparatus for configuring the task goal of the live stream can solve the problem that in the related art, the user need to manually and sequentially select categories of virtual gifts and fill in corresponding quantities of the virtual gifts every time task goals are configured, thereby improving operation convenience and improving the efficiency of configuring the task goal. At the same time, it can be guaranteed that the configured task goal is more in line with actual situations of the user, which is conducive to improving the completion rate of the task goal to a certain extent.

### Embodiment 5

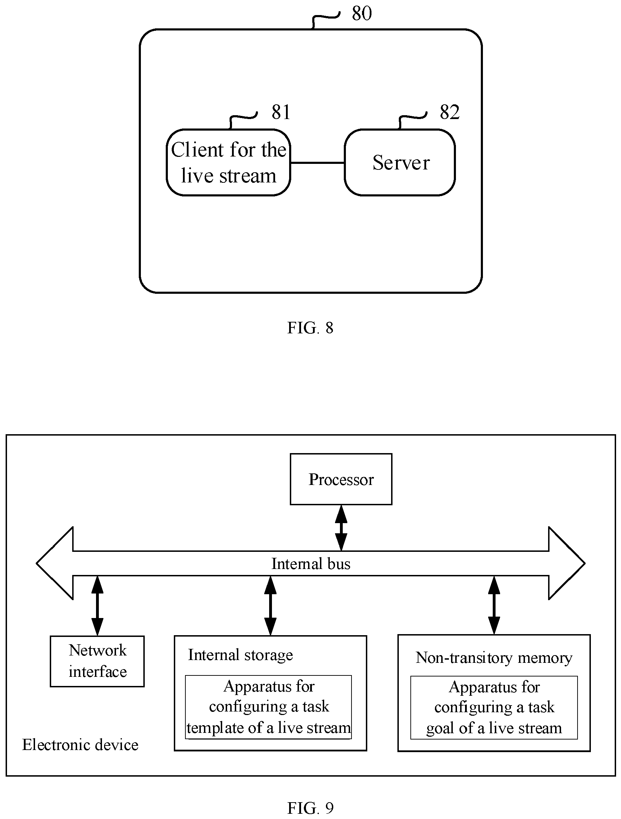

FIG. 8 is a block diagram of a system 80 for configuring a task goal of a live stream according to an exemplary embodiment. Referring to FIG. 8, the system includes a client for the live stream 81 and a server 82.

The server 82 is configured to determine, in response to a received task goal configuration instruction sent by the client for the live stream 81 for a specified task, candidate task goals according to historical data representing a task goal of the specified task, and send the candidate task goals to the client for the live stream 81.

The client for the live stream 81 is configured to send the task goal configuration instruction to the server 82, display the received candidate task goals sent by the server 82 as optional configuration items on a task goal configuration interface of the client for the live stream 81, and configure, in response to a selection operation for the optional configuration items, the task goal of the specified task.

In some embodiments, the sending, by the client for the live stream 81, the task goal configuration instruction for the specified task to the server 82 includes the following.

The client for the live stream 81 receives an input instruction associated with the task goal configuration interface; and in response to the input instruction, the task goal configuration instruction for the specified task is sent to the server 82.

The input instruction includes: an instruction configured to trigger display of the task goal configuration interface or an instruction configured to trigger switching of the optional configuration items displayed in the task goal configuration interface and corresponding to the candidate task goals.

In one optional implementation, the historical data includes data of a historical income obtained by a user bound to the client for the live stream 81 by executing the specified task. The determining, by the server 82, the candidate task goals of the specified task includes: in response to the task goal configuration instruction, the server 82 determines a predicted income in the live stream according to the data of the historical income obtained by the user bound to the client for the live stream by executing the specified task; and the server 82 determines candidate task goals matching the predicted income in the live stream according to the predicted income in the live stream.

In some embodiments, the specified task includes obtaining virtual resources. The candidate task goals include types and quantities of the virtual resources. The data of the historical income obtained by the user bound to the client for the live stream 81 by executing the specified task includes a type and a quantity of each of at least one type of virtual resource obtained historically by the user. So, the determining, by the server 82, the candidate task goals matching the predicted income in the live stream includes: the server 82 configures a weight coefficient for each of the at least one type of virtual resource respectively according to the quantity of each of the at least one type of virtual resource obtained historically by the user, and according to a configuration rule that the quantity is positively or negatively correlated with the weight coefficient; the server 82 selects a type from the at least one type of virtual resource obtained historically by the user according to the weight coefficients configured for the at least one type of virtual resource as types of the virtual resources in the candidate task goals; and the server 82 determines the quantity of the virtual resources in the candidate task goals according to the predicted income in the live stream, the types of the virtual resources in the candidate task goals, and an income corresponding to each type of virtual resource in the candidate task goals.

In some embodiments, the determining, by the server 82, the predicted income in the live stream according to the data of the historical income obtained by the user bound to the client for the live stream 81 by executing the specified task includes: the server 82 determines a historical income of the user according to the data of the historical income obtained by the user bound to the client for the live stream 81 by executing the specified task; and the server 82 determines the predicted income in the live stream according to the historical income and a preset income growth factor. The predicted income in the live stream is configured to predict an income capable of being obtained by the user by executing the specified task or the determined historical income of the user.

In some embodiments, the historical data capable of representing the task goal of the specified task includes at least one of the following.

Data of a historical task goal configured by the user bound to the client for the live stream 81 for the specified task.

Data of a historical task goal realized by the user in executing the specified task.

Data of historical task goals configured by a user other than the user for the specified task.

Data of historical task goals realized by the other users in executing the specified task.

The system for configuring the task goal of the live stream can avoid the problem that in the related art, the user need to manually and sequentially select categories of virtual gifts and fill in corresponding quantities of the virtual gifts every time task goals are configured, thereby improving operation convenience and improving the efficiency of configuring the task goal. At the same time, it can be guaranteed that the configured task goal is more in line with actual situations of the user, which is conducive to improving the completion rate of the task goal to a certain extent.

An embodiment of the present disclosure further provides an electronic device. Please refer to FIG. 9 for a schematic diagram. At the hardware level, the electronic device includes a processor, and optionally an internal bus, a network interface, and a memory. The memory may include an internal storage, such as a high-speed random access memory (RAM), and may further include a non-volatile memory, such as at least one disk memory. Of course, the electronic device may further include hardware required by other services.

The processor, the network interface, and the memory may be connected to each other through the internal bus. The internal bus may be an industry standard architecture (ISA) bus, a peripheral component interconnect (PCI) bus or an extended industry standard architecture (EISA) bus, etc. The bus may be divided into an address bus, a data bus, a control bus, and the like. For ease of presentation, only one bidirectional arrow is used in FIG. 9, but it does not mean that there is only one bus or one type of bus.

The memory is configured to store programs. Specifically, the programs may include program codes, and the program codes include computer operation instructions. The memory may include the internal storage and the non-volatile memory, and provide instructions and data for the processor.

The processor reads a corresponding computer program from the non-volatile memory to the internal storage and then runs it, thereby forming an apparatus for configuring a task goal of a live stream on a logical level. The processor executes the programs stored in the memory, and is configured to execute at least steps executed by a server 82 in a system for configuring a task goal of a live stream disclosed in the embodiment shown in FIG. 8.

The processor may be an integrated circuit chip with signal processing capabilities. In the implementation process, each step of the method may be completed by an integrated logic circuit of hardware in the processor or instructions in the form of software. The processor may be a general-purpose processor, including a central processing unit (CPU), a network processor (NP), etc. The processor may further be a digital signal processor (DSP), an application specific integrated circuit (ASIC), a field-programmable gate array (FPGA) or other programmable logic devices, discrete gate or transistor logic devices, and discrete hardware components. The methods, steps, and logical block diagrams disclosed in the embodiments of the present disclosure may be implemented or executed. The general-purpose processor may be a microprocessor or any conventional processor or the like. The steps of the method disclosed in the embodiment of the present disclosure may be directly embodied as being executed and completed by a hardware decoding processor, or executed and completed by a combination of hardware and software modules in the decoding processor. The software modules may be located in a mature storage medium in the field, such as a random access memory, a flash memory, a read-only memory, a programmable read-only memory or an electrically erasable programmable memory, and a register. The storage medium is located in the memory, and the processor reads information in the memory and completes the steps of the method in combination with its hardware.

An embodiment of the present disclosure further provides a computer-readable storage medium. A computer program is stored on the computer-readable storage medium. When the computer program is executed by a processor, each process of the embodiment of the method for configuring the task goal of the live stream is realized, and the same technical effect may be realized, which will not be repeated here. The computer-readable storage medium may be a read-only memory (ROM), a random access memory (RAM), a magnetic disk, or a compact disk, etc.

### Embodiment 6

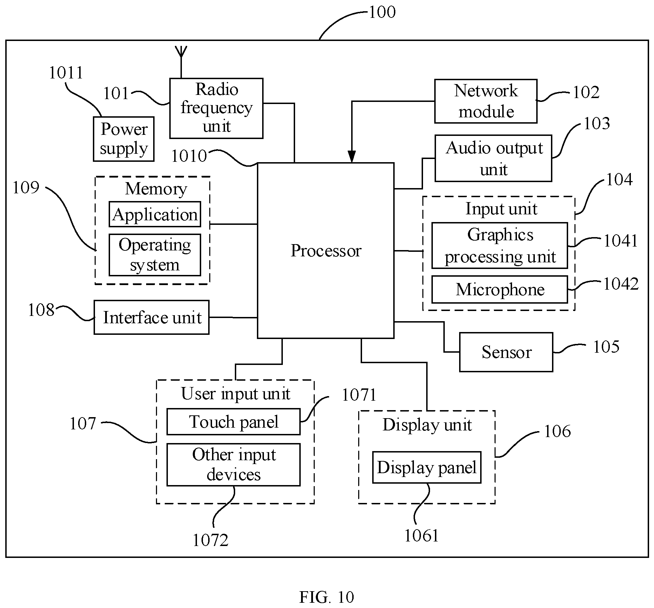

FIG. 10 is a schematic structural diagram of hardware of an electronic device according to an exemplary embodiment. As shown in FIG. 10, the electronic device 100 includes, but is not limited to: a radio frequency unit 101, a network module 102, an audio output unit 103, an input unit 104, a sensor 105, a display unit 106, a user input unit 107, an interface unit 108, a memory 109, a processor 1010, a power supply 1011 and the like.

Those skilled in the art can understand that the structure of the electronic device shown in FIG. 10 does not constitute a limitation on the electronic device. The electronic device may include more or less components than those shown in the figure, or combinations of certain components, or different component arrangements. In the embodiment of the present disclosure, the electronic device includes, but is not limited to, mobile phones, tablet computers, notebook computers, palmtop computers, in-vehicle terminals, wearable devices, pedometers and the like.

The processor 1010 is coupled to the memory, and is configured to: receive a task goal configuration instruction for a specified task of a live stream; determine, in response to the task goal configuration instruction, candidate task goals according to historical data representing a task goal of the specified task; display the candidate task goals as optional configuration items on a task goal configuration interface of a client for the live stream; and configure, in response to a selection operation for the optional configuration items, the task goal of the specified task.

In one optional implementation, the task goal configuration instruction includes an instruction configured to trigger display of the task goal configuration interface, or an instruction configured to trigger switching of the optional configuration items displayed in the task goal configuration interface and corresponding to the candidate task goals.

Optionally, the historical data includes data of a historical income obtained by a user bound to the client for the live stream by executing the specified task. The determining the candidate task goals of the specified task include the following.

In response to the instruction configured to trigger switching of the task goals, a predicted income in the live stream is determined according to the data of the historical income; and candidate task goals matching the predicted income in the live stream are determined according to the predicted income in the live stream.

In one optional implementation, in response to the specified task including obtaining virtual resources, the candidate task goals include types and quantities of the virtual resources. The data of the historical income obtained by the user bound to the client for the live stream by executing the specified task includes: a type and the quantity of each of at least one type of virtual resource obtained historically by the user. The candidate task goals matching the predicted income in the live stream are determined by the following.

A Weight coefficients are configured for each of the at least one type of virtual resource according to the quantity of each of the at least one type of virtual resource obtained historically by the user, and according to a configuration rule that the quantity is positively or negatively correlated with the weight coefficient.

A type is selected from at least one type of virtual resource obtained historically by the user according to the weight coefficient configured for each of the at least one type of virtual resource as types of the virtual resources in the candidate task goals.

The quantity of the virtual resources in the candidate task goals is determined according to the predicted income in the live stream, the types of the virtual resources in the candidate task goals, and an income corresponding to each type of virtual resource in the candidate task goals.

In one optional implementation, the predicted income in the live stream according to the data of the historical income is determined by the following.

A historical income of the user is determined according to the data of the historical income. The predicted income in the live stream is determined according to the historical income and a preset income growth factor, wherein the predicted income in the live stream is configured to predict an income capable of being obtained by the user by executing the specified task or the determined historical income of the user.

The historical data capable of representing the task goal of the specified task includes at least one of the following.

Data of a historical task goal configured by the user bound to the client for the live stream for the specified task.

Data of a historical task goal realized by the user in executing the specified task.

Data of historical task goals configured by a user other than the user for the specified task.

Data of historical task goals realized by the other users in executing the specified task.

The memory 109 is configured to store computer programs capable of running on the processor 1010. When the computer programs are executed by the processor 1010, the above functions realized by the processor 1010 are realized.

It should be understood that, in the embodiment of the present disclosure, the radio frequency unit 101 may be configured to receive and transmit signals in the process of sending and receiving information or talking. Specifically, downlink data from a base station is received and then processed by the processor 1010, and in addition, uplink data is transmitted to the base station. Generally, the radio frequency unit 101 includes, but is not limited to, an antenna, at least one amplifier, a transceiver, a coupler, a low noise amplifier, a duplexer, and the like. In addition, the radio frequency unit 101 may further communicate with a network and other devices through a wireless communication system.

The electronic device provides users with wireless broadband Internet access through the network module 102, such as helping users to send and receive emails, browse web pages, and access streaming media.

The audio output unit 103 may convert audio data received by the radio frequency unit 101 or the network module 102 or stored in the memory 109 into an audio signal and output it as sounds. Moreover, the audio output unit 103 may further provide audio output related to a specific function executed by the electronic device 100 (for example, a call signal reception sound, a message reception sound, etc.). The audio output unit 103 includes a speaker, a buzzer, a receiver, and the like.

The input unit 104 is configured to receive audio or video signals. The input unit 104 may include a graphics processing unit (GPU) 1041 and a microphone 1042. The graphics processing unit 1041 processes still pictures or video image data obtained by an image capture device (such as a camera) in a video capture mode or an image capture mode. Processed image frames may be displayed on the display unit 106. The image frames processed by the graphics processing unit 1041 may be stored in the memory 109 (or other storage media), or sent via the radio frequency unit 101 or the network module 102. The microphone 1042 may receive sounds, and may process such sounds into audio data. The processed audio data may be converted into a format that may be sent to a mobile communication base station via the radio frequency unit 101 for output in the case of a telephone call mode.

The electronic device 100 further includes at least one sensor 105, such as a light sensor, a motion sensor, and other sensors. Specifically, the light sensor includes an ambient light sensor and a proximity sensor. The ambient light sensor may adjust the brightness of a display panel 1061 according to the brightness of ambient light. The proximity sensor may close the display panel 1061 and/or backlight when the electronic device 100 is moved to the ear. As a kind of motion sensor, an accelerometer sensor may detect the magnitude of acceleration in each direction (usually three axes), and may detect out the magnitude and direction of gravity when stationary, and may be used for posture (such as landscape or portrait screen switching, related games, and magnetometer attitude calibration) recognition of the electronic device, vibration recognition related functions (such as a pedometer and percussion), etc. The sensor 105 may further include fingerprint sensors, pressure sensors, iris sensors, molecular sensors, gyroscopes, barometers, hygrometers, thermometers, infrared sensors, etc., which will not be repeated here.

The display unit 106 is configured to display information input by users or information provided to the users. The display unit 106 may include a display panel 1061, and the display panel 1061 may be configured in the form of a liquid crystal display (LCD), an organic light-emitting diode (OLED), and the like.

The user input unit 107 may be configured to receive input number or character information, and generate key signal input related to user configuration and function control of the electronic device. Specifically, the user input unit 107 includes a touch panel 1071 and other input devices 1072. The touch panel 1071, also referred to as a touch screen, may collect a user's touch operation on or near it (for example, an operation made by the user using any suitable objects or accessories such as fingers and a touch pen on the touch panel 1071 or near the touch panel 1071). The touch panel 1071 may include two parts: a touch detection apparatus and a touch controller. The touch detection apparatus detects the user's touch position, detects a signal brought by the touch operation, and transmits the signal to the touch controller. The touch controller receives touch information from the touch detection apparatus, converts the touch information into contact coordinates, then sends the contact coordinates to the processor 1010, and receives and executes a command sent by the processor 1010. In addition, the touch panel 1071 may be implemented in various types such as resistive, capacitive, infrared, and surface acoustic wave. In addition to the touch panel 1071, the user input unit 107 may further include other input devices 1072. Specifically, the other input devices 1072 may include, but are not limited to, a physical keyboard, function keys (such as volume control buttons and switch buttons), a trackball, a mouse, and a joystick, which will not be repeated here.

Further, the touch panel 1071 may cover the display panel 1061. When detecting out the touch operation on or near it, the touch panel 1071 transmits the touch operation to the processor 1010 to determine a type of a touch event, and then the processor 1010 provides corresponding visual output on the display panel 1061 according to the type of the touch event. Although in FIG. 10, the touch panel 1071 and the display panel 1061 are used as two independent components to realize input and output functions of the electronic device, in some embodiments, the touch panel 1071 and the display panel 1061 may be integrated to realize the input and output functions of the electronic device, which is not specifically limited here.

The interface unit 108 is an interface for connecting an external device with the electronic device 100. For example, the external device may include a wired or wireless headset port, an external power supply (or a battery charger) port, a wired or wireless data port, a memory card port, a port for connecting a device with an identification module, an audio input/output (I/O) port, a video I/O port, a headphone port, etc. The interface unit 108 may be configured to receive input (for example, data information, power, etc.) from the external device and transmit the received input to one or more elements in the electronic device 100, or may be configured to transmit data between the electronic device 100 and the external device.

The memory 109 may be configured to store software programs and various data. The memory 109 may mainly include a program storage region and a data storage region. The program storage region may store an operating system, application programs required for at least one function (such as a sound playback function and an image playback function), etc. The data storage region may store data (such as audio data and a phone book) created according to use of mobile phones, etc. In addition, the memory 109 may include a high-speed random access memory, and may further include a non-volatile memory, such as at least one magnetic disk storage device, a flash memory device, or other volatile solid-state storage devices.

The processor 1010 is a control center of the electronic device, connects various parts of the entire electronic device by using various interfaces and lines, and executes various functions of the electronic device and processes data by running or executing software programs and/or modules stored in the memory 109, and calling the data stored in the memory 109, so as to monitor the electronic device as a whole. The processor 1010 may include one or more processing units. Preferably, the processor 1010 may integrate an application processor and a modem processor. The application processor mainly processes the operating system, a user interface, the application programs, etc. The modem processor mainly processes wireless communications. It can be understood that the modem processor may also not be integrated into the processor 1010.

The electronic device 100 may further include the power supply 1011 (such as a battery) for supplying power to various components. Preferably, the power supply 1011 may be logically connected to the processor 1010 through a power management system, so charging management, discharging management, power consumption management and other functions are realized through the power management system.

In addition, the electronic device 100 includes some functional modules not shown, which will not be repeated here.

In some embodiments, a storage medium including an instruction is further provided. A computer program is stored on a computer-readable storage medium, and when executed by a processor, the computer program realizes each process of the method for configuring the task goal of the live stream according to any one of the embodiments, and may realize the same technical effect, which will not be repeated here. Optionally, the storage medium may be a non-transitory computer-readable storage medium. For example, the non-transitory computer-readable storage medium may be a ROM, a random access memory (RAM), a CD-ROM, magnetic tape, a floppy disk, and an optical data storage device, etc.

Other implementation solutions of the present disclosure will be apparent to those skilled in the art from consideration of the specification and practice of the disclosure disclosed herein. The present disclosure is intended to cover any variations, uses, or adaptations of the present disclosure following the general principles of the present disclosure and including known or customary practice in the art to which the present disclosure pertains. It is intended that the specification and embodiments be considered as exemplary only, with a true scope and spirit of the present disclosure being indicated by the following claims.

It should be understood that the present disclosure is not limited to the precise arrangements described above and shown in the accompanying drawings, and that various modifications and changes may be made without departing from the scope thereof. The scope of the present disclosure is limited only by the following claims.

Other implementation solutions of the present disclosure will be apparent to those skilled in the art from consideration of the specification and practice of the disclosure disclosed herein. The present disclosure is intended to cover any variations, uses, or adaptations of the present disclosure following the general principles of the present disclosure and including known or customary practice in the art to which the present disclosure pertains. It is intended that the specification and embodiments be considered as exemplary only, with a true scope and spirit of the present disclosure being indicated by the following claims.

It should be understood that the present disclosure is not limited to the precise arrangements described above and shown in the accompanying drawings, and that various modifications and changes may be made without departing from the scope thereof. The scope of the present disclosure is limited only by the following claims.

## Claims

1. A method for configuring a task goal of a live stream, comprising:
receiving a task goal configuration instruction for a specified task of a live stream;
determining, in response to the task goal configuration instruction, candidate task goals according to historical data representing a task goal of the specified task;
displaying the candidate task goals as optional configuration items on a task goal configuration interface of a client for the live stream; and
configuring, in response to a selection operation for the optional configuration items, the task goal of the specified task.

2. The method according to claim 1, wherein the task goal configuration instruction comprises an instruction configured to trigger display of the task goal configuration interface or an instruction configured to trigger switching of the optional configuration items displayed in the task goal configuration interface and corresponding to the candidate task goals.

3. The method according to claim 2, wherein the historical data comprises data of a historical income obtained by a user bound to the client for the live stream by executing the specified task, and said determining the candidate task goals comprises:
determining, in response to the task goal configuration instruction, a predicted income in the live stream according to the data of the historical income obtained by the user bound to the client for the live stream by executing the specified task; and
determining, according to the predicted income in the live stream, the candidate task goals matching the predicted income in the live stream.

4. The method according to claim 3, wherein in response to the specified task comprising obtaining virtual resources, the candidate task goals comprise types and quantities of the virtual resources; and the data of the historical income obtained by the user bound to the client for the live stream by executing the specified task comprises a type and a quantity of at least one type of virtual resource obtained historically by the user, and said determining the candidate task goals matching the predicted income in the live stream comprises:
configuring a weight coefficient for the at least one type of virtual resource according to the quantity of the at least one type of virtual resource obtained historically by the user, and according to a configuration rule that the quantity is positively or negatively correlated with the weight coefficient;
selecting a type from the at least one type of virtual resource obtained historically by the user according to the weight coefficient configured for the at least one type of virtual resource as types of the virtual resources in the candidate task goals; and
determining the quantity of the virtual resources in the candidate task goals according to the predicted income in the live stream, the types of the virtual resources in the candidate task goals, and an income corresponding to each type of virtual resource in the candidate task goals.

5. The method according to claim 3 or 4, wherein said determining the predicted income in the live stream according to the data of the historical income obtained by the user bound to the client for the live stream by executing the specified task comprises:
determining a historical income of the user bound to the client for the live stream according to the data of the historical income obtained by the user bound to the client for the live stream by executing the specified task; and
determining the predicted income in the live stream according to the historical income and a preset income growth factor, wherein the predicted income in the live stream is configured to predict an income capable of being obtained by the user by executing the specified task or the determined historical income of the user.

6. The method according to claim 1, wherein the historical data representing the task goal of the specified task comprises at least one of the following:
data of a historical task goal configured by the user bound to the client for the live stream for the specified task;
data of a historical task goal realized by the user in executing the specified task;
data of historical task goals configured by a user other than the user for the specified task; and
data of historical task goals realized by other users in executing the specified task.

7. A method for configuring a task goal of a live stream, comprising:
sending, by a client for the live stream, a task goal configuration instruction for a specified task to a server;
determining, by the server, candidate task goals according to historical data representing a task goal of the specified task in response to the received task goal configuration instruction, and sending the candidate task goals to the client for the live stream;
displaying, by the client for the live stream, the candidate task goals as optional configuration items on a task goal configuration interface of the client for the live stream; and configuring, in response to a selection operation for the optional configuration items, the task goal of the specified task.

8. The method according to claim 7, wherein said sending, by the client for the live stream, the task goal configuration instruction for the specified task to the server comprises:
receiving, by the client for the live stream, an input instruction associated with the task goal configuration interface; and
sending, in response to the input instruction, the task goal configuration instruction for the specified task to the server; wherein
the input instruction comprises an instruction configured to trigger display of the task goal configuration interface or an instruction configured to trigger switching of the optional configuration items displayed in the task goal configuration interface and corresponding to the candidate task goals.

9. The method according to claim 8, wherein the historical data comprises data of a historical income obtained by a user bound to the client for the live stream by executing the specified task, and said determining, by the server, the candidate task goals of the specified task comprises:
determining, by the server, a predicted income in the live stream according to the data of the historical income obtained by the user bound to the client for the live stream by executing the specified task in response to the task goal configuration instruction; and
determining, by the server, the candidate task goals matching the predicted income in the live stream according to the predicted income in the live stream.

10. The method according to claim 9, wherein in response to the specified task comprising obtaining virtual resources, the candidate task goals comprise types and quantities of the virtual resources;
and the data of the historical income obtained by the user bound to the client for the live stream by executing the specified task comprises a type and a quantity of at least one type of virtual resource obtained historically by the user; and said determining the candidate task goals matching the predicted income in the live stream comprises:
configuring, by the server, a weight coefficient for the at least one type of virtual resource according to the quantity of the at least one type of virtual resource obtained historically by the user, and according to a configuration rule that the quantity is positively or negatively correlated with the weight coefficient;
selecting, by the server, a type from the at least one type of virtual resource obtained historically by the user according to the weight coefficient configured for the at least one type of virtual resource as types of the virtual resources in the candidate task goals; and
determining, by the server, the quantity of the virtual resources in the candidate task goals according to the predicted income in the live stream, the types of the virtual resources in the candidate task goals, and an income corresponding to each type of virtual resource in the candidate task goals.

11. The method according to claim 9 or 10, wherein said determining, by the server, the predicted income in the live stream according to the data of the historical income obtained by the user bound to the client for the live stream by executing the specified task comprises:
determining, by the server, a historical income of the user bound to the client for the live stream according to the data of the historical income obtained by the user bound to the client for the live stream by executing the specified task; and
determining, by the server, the predicted income in the live stream according to the historical income and a preset income growth factor, wherein the predicted income in the live stream is configured to predict an income capable of being obtained by the user by executing the specified task or the determined historical income of the user.

12. The method according to claim 7, wherein the historical data representing the task goal of the specified task comprises at least one of the following:
data of a historical task goal configured by the user bound to the client for the live stream for the specified task;
data of a historical task goal realized by the user in executing the specified task;
data of historical task goals configured by a user other than the user for the specified task; and
data of historical task goals realized by other users in executing the specified task.

13. An apparatus for configuring a task goal of a live stream, comprising:
a receiving module, configured to receive a task goal configuration instruction for a specified task;
a determining module, configured to determine, in response to the task goal configuration instruction, candidate task goals according to historical data representing a task goal of the specified task;
a display module, configured to display the candidate task goals as optional configuration items on a task goal configuration interface of a client for the live stream; and
a configuration module, configured to configure, in response to a selection operation for the optional configuration items, the task goal of the specified task.

14. The apparatus according to claim 13, wherein the task goal configuration instruction comprises an instruction configured to trigger display of the task goal configuration interface or an instruction configured to trigger switching of the optional configuration items displayed in the task goal configuration interface and corresponding to the candidate task goals.

15. The apparatus according to claim 13, wherein the historical data comprises data of a historical income obtained by a user bound to the client for the live stream by executing the specified task, and the determining module comprises:
an income prediction unit, configured to determine, in response to the task goal configuration instruction, a predicted income in the live stream according to the data of the historical income obtained by the user bound to the client for the live stream by executing the specified task; and
a task goal determining unit, configured to determine, according to the predicted income in the live stream, the candidate task goals matching the predicted income in the live stream.

16. The apparatus according to claim 15, wherein in response to the specified task comprising obtaining virtual resources, the candidate task goals comprise types and quantities of the virtual resources; and
the data of the historical income obtained by the user bound to the client for the live stream by executing the specified task comprises a type and quantity of at least one type of virtual resource obtained historically by the user; and the task goal determining unit is configured to:
configure a weight coefficient for the at least one type of virtual resource according to the quantity of the at least one type of virtual resource obtained historically by the user, and according to a configuration rule that the quantity is positively or negatively correlated with the weight coefficient;
select a type from the at least one type of virtual resource obtained historically by the user according to the weight coefficient configured for the at least one type of virtual resource as types of the virtual resources in the candidate task goals; and
determine the quantity of the virtual resources in the candidate task goals according to the predicted income in the live stream, the types of the virtual resources in the candidate task goals, and an income corresponding to each type of virtual resource in the candidate task goals.

17. The apparatus according to claim 15 or 16, wherein the income prediction unit is further configured to:
determine a historical income of the user according to the data of the historical income obtained by the user bound to the client for the live stream by executing the specified task; and
determine the predicted income in the live stream according to the historical income and a preset income growth factor, wherein the predicted income in the live stream is configured to predict an income capable of being obtained by the user by executing the specified task or the determined historical income of the user.

18. The apparatus according to claim 13, wherein the historical data representing the task goal of the specified task comprises at least one of the following:
data of a historical task goal configured by the user bound to the client for the live stream for the specified task;
data of a historical task goal realized by the user in executing the specified task;
data of historical task goals configured by a user other than the user for the specified task; and
data of historical task goals realized by other users in executing the specified task.

19. An apparatus for configuring a task goal of a live stream, comprising:
a sending module, configured to send a task goal configuration instruction for a specified task to a server, wherein
the server determines, in response to the received task goal configuration instruction, candidate task goals according to historical data representing a task goal of the specified task, and sends the candidate task goals to a client for the live stream; and
a display module, configured to display the candidate task goals as optional configuration items on a task goal configuration interface of the client for the live stream, and configure, in response to a selection operation for the optional configuration items, the task goal of the specified task.

20. The apparatus according to claim 19, wherein the sending module is further configured to receive an input instruction associated with the task goal configuration interface, and send, in response to the input instruction, the task goal configuration instruction for the specified task to the server; wherein
the input instruction comprises an instruction configured to trigger display of the task goal configuration interface or an instruction configured to trigger switching of the optional configuration items displayed in the task goal configuration interface and corresponding to the candidate task goals.

21. The apparatus according to claim 20, wherein the historical data comprises data of a historical income obtained by a user bound to the client for the live stream by executing the specified task; and
the determining, by the server, the candidate task goals of the specified task comprises:
determining, in response to the task goal configuration instruction and by the server, a predicted income in the live stream according to the data of the historical income obtained by the user bound to the client for the live stream by executing the specified task; and
determining, by the server, the candidate task goals matching the predicted income in the live stream according to the predicted income in the live stream.

22. The apparatus according to claim 21, wherein in response to the specified task comprising obtaining virtual resources, the candidate task goals comprise types and quantities of the virtual resources;
the data of the historical income obtained by the user bound to the client for the live stream by executing the specified task comprises a type and quantity of at least one type of virtual resource obtained historically by the user; and
the determining the candidate task goals matching the predicted income in the live stream comprises:
configuring, by the server, a weight coefficient for the at least one type of virtual resources according to the quantity of the at least one type of virtual resources obtained historically by the user, and according to a configuration rule that the quantity is positively or negatively correlated with the weight coefficient;
selecting, by the server, a type from the at least one type of virtual resources obtained historically by the user according to the weight coefficient configured for the at least one type of virtual resources as types of the virtual resources in the candidate task goals; and
determining, by the server, the quantity of the virtual resources in the candidate task goals according to the predicted income in the live stream, the types of the virtual resources in the candidate task goals, and an income corresponding to each type of virtual resource in the candidate task goals.

23. The apparatus according to claim 21 or 22, wherein the determining, by the server, the predicted income in the live stream according to the data of the historical income obtained by the user bound to the client for the live stream by executing the specified task comprises:
determining, by the server, a historical income of the user bound to the client for the live stream according to the data of the historical income obtained by the user bound to the client for the live stream by executing the specified task; and
determining, by the server, the predicted income in the live stream according to the historical income and a preset income growth factor, wherein the predicted income in the live stream is configured to predict an income capable of being obtained by the user by executing the specified task or the determined historical income of the user.

24. The apparatus according to claim 19, wherein the historical data representing the task goal of the specified task comprises at least one of the following:
data of a historical task goal configured by the user bound to the client for the live stream for the specified task;
data of a historical task goal realized by the user in executing the specified task;
data of historical task goals configured by a user other than the user for the specified task; and
data of historical task goals realized by other users in executing the specified task.

25. A system for configuring a task goal of a live stream, comprising a client for the live stream and a server, wherein
the server is configured to determine, in response to a received task goal configuration instruction sent by the client for the live stream for a specified task, candidate task goals according to historical data representing a task goal of the specified task, and send the candidate task goals to the client for the live stream; and
the client for the live stream is configured to send the task goal configuration instruction to the server, display the received candidate task goals sent by the server as optional configuration items on a task goal configuration interface of the client for the live stream, and configure, in response to a selection operation for the optional configuration items, the task goal of the specified task.

26. An electronic device for configuring a task goal of a live stream, comprising:
a processor; and
a memory configured to store an instruction capable of being executed by the processor; wherein
the processor is configured to execute the instruction to perform the method for configuring the task goal of the live stream according to any one of claims 1-6.

27. An electronic device for configuring a task goal of a live stream, comprising:
a processor; and
a memory configured to store an instruction capable of being executed by the processor; wherein
the processor is configured to execute the instruction to perform the method for configuring the task goal of the live stream according to any one of claims 7-12.

28. A storage medium, wherein an instruction in the storage medium is executed by a processor of an electronic device to cause the processor to perform the method for configuring the task goal of the live stream according to any one of claims 1-6 or claims 7-12.
